# EUROPÄISCHE PATENTANMELDUNG

(11) **EP 1 072 917 A1**
(43) Veröffentlichungstag der Anmeldung: **31.01.2001**
(21) Anmeldenummer: 00810623.9
(22) Anmeldetag: 14.07.2000
(51) Int. Cl.: G02B 6/38

(54) **Steckerteil mit Schutzklappe für eine optische Steckverbindung**

(30) Priorität: 26.07.1999 EP 99810666; 06.01.2000 EP 00810007
(71) Anmelder: Diamond SA, 6616 Losone (CH)
(72) Erfinder: De Marchi, Silverio, 6612 Ascona (CH)
(74) Vertreter: Wenger, René

(57) **Zusammenfassung**

Das Steckerteil (1) verfügt über eine Schutzklappe (14), welche an einem Lagerabschnitt derart am Steckergehäuse (2) gelenkig gelagert ist, dass sie beim Einstecken des Steckerteils in ein Buchsenteil aus einer Schliessposition mit verdeckter Stirnseite des Steckerstifts (3) in eine Öffnungsposition mit freiliegender Stirnseite des Steckerstifts bewegbar ist. Der Lagerabschnitt oder gegebenenfalls eine Führungsbahn (15) kann dabei ganz oder teilweise durch ein Führungselement (6), vorzugsweise in der Form eines etwa U-förmigen Bügels gebildet werden. Dies erlaubt eine sichere Lagerung der Schutzklappe auch bei kleinformatigen Steckerteilen, bei denen die Anordnung von Lagerelementen am Steckergehäuse nicht mehr realisierbar ist.

## Beschreibung

Die Erfindung betrifft ein Steckerteil für eine optische Steckverbindung gemäss dem Oberbegriff von Anspruch 1.

Moderne optische Steckerteile sind heute konsequent mit Schutzklappen versehen, nicht nur um die empfindliche Stirnseite des Steckerstifts vor Verschmutzung und vor mechanischen Einwirkungen zu schützen, sondern auch um zu verhindern, dass im ausgesteckten Zustand Laserlicht austreten kann. Die Schutzklappen sind dabei gelenkig gelagert, und sie können je nach Bauart des Steckerteils beim Einstecken in ein korrespondierendes Buchsenteil entweder nur aufgeschwenkt oder aufgeschwenkt und zurückgeschoben werden. Beispiele für derartige Steckerteile sind in der EP-A-823 649 oder in der WO 98/53347 beschrieben.

Bei ausreichender Grösse des Steckergehäuses bietet die Integration des Lagerabschnitts oder allenfalls der Führungsbahn keinerlei Probleme. Im Zusammenhang mit der zunehmenden Miniaturisierung der Steckerteile ist es jedoch an einem Kunststoffgehäuse relativ schwierig, mechanisch stabile Lagerabschnitte und insbesondere Führungsbahnen anzuordnen, weil bestimmte minimale Wandstärken aus giesstechnischen Gründen nicht unterschritten werden dürfen. Auch die Entformung eines entsprechenden Gussteiles kann relativ kompliziert sein und dadurch die Produktion erschweren.

Es ist daher eine Aufgabe der Erfindung, ein Steckerteil der eingangs genannten Art zu schaffen, bei dem die gelenkige Lagerung der Schutzklappe vereinfacht wird, wobei insbesondere auch an kleinformatigen Steckerteilen eine mechanisch stabile Gelenkfunktion gewährleistet ist. Dabei soll sowohl die Herstellung des Steckergehäuses, als auch die Montage des Gesamtsteckerteils vereinfacht werden. Diese Aufgabe wird erfindungsgemäss mit einem Steckerteil gelöst, das die Merkmale im Anspruch 1 aufweist.

Das am Steckergehäuse befestigte Führungselement übernimmt dabei auf einfache Weise die Lagerfunktion für die Schutzklappe, indem es den Lagerabschnitt bildet oder aber wenigstens Bestandteil dieses Lagerabschnitts ist. Das Steckergehäuse selbst kann dabei so einfach wie möglich ausgebildet werden, und es muss keine schwierig zu entformenden Hinterschneidungen oder Gelenköffnungen aufweisen. Wenn das Führungselement den gesamten Lagerabschnitt bildet, ist die Schutzklappe vollständig am Führungselement angelenkt, unabhängig von der Form des Steckergehäuses. Wenn das Führungselement dagegen lediglich Bestandteil des Lagerabschnitts ist, wird für die Erfüllung der Lagerfunktion stets auch zumindest ein Oberflächenabschnitt des Steckergehäuses benötigt.

Eine besonders vorteilhafte Lagerung der Schutzklappe kann erreicht werden, wenn diese an einer Führungsbahn derart schwenkbar und verschiebbar gelagert ist, dass sie aus der Schliessposition an der Stirnseite des Steckergehäuses in eine relativ zur Stirnseite zurückversetzte Öffnungsposition bewegbar ist, wobei das Führungselement die Führungsbahn bildet oder Bestandteil der Führungsbahn ist. Die Schutzklappe führt dabei nicht nur eine Schwenkbewegung aus, sondern sie wird entlang der Führungsbahn auch noch zurückgeschoben. Die Führungsbahn kann dabei geradlinig oder auch kurvenförmig verlaufen.

Eine besonders einfache Montage des Steckerteils kann erreicht werden, wenn das Führungselement ein vorzugsweise etwa U-förmiger Bügel ist, der auf das Steckergehäuse aufgeschnappt ist und dieses wenigstens teilweise umgibt. Das Führungselement ist dabei besonders vorteilhaft aus Stahl, insbesondere als Biegeteil aus Stahlblech gefertigt. Derartige Biegeteile lassen sich sehr kostengünstig herstellen. Alternativ könnte das Führungselement natürlich auch aus einem geeigneten Kunststoffmaterial gefertigt werden.

Eine Sicherung eines etwa U-förmigen Bügels auf dem Steckergehäuse kann dadurch erreicht werden, dass in den beiden seitlichen U-Schenkeln wenigstens je eine Aussparung angeordnet ist, welche mit wenigstens je einer Materialerhebung auf der Aussenseite des Steckergehäuses zusammenwirkt. Eine Verschiebung des Bügels auf dem Steckergehäuse ist dadurch nicht mehr möglich.

Das Steckergehäuse könnte auch aus wenigstens zwei separaten Gehäuseteilen bestehen, wobei die beiden Gehäuseteile durch das Führungselement bzw. durch den Bügel zusammengehalten werden. Neben der Lagerfunktion übernimmt das Führungselement in diesem Fall auch noch die Funktion eines Verbindungselements.

Bei Schutzklappen, die in einer Führungsbahn verschiebbar sind, kann letztere durch einen Oberflächenabschnitt des Steckergehäuses und durch einen Oberflächenabschnitt des Führungselements gebildet werden. Bei U-förmigen Bügeln lässt sich dies besonders einfach dadurch realisieren, dass die U-Schenkel an den freien Enden abgewinkelt sind. Die Abwinklungen bilden dabei einen Oberflächenabschnitt für die Führungsbahn.

Die Schutzklappen können auf unterschiedliche Weise am Führungselement gelagert werden. Besonders vorteilhaft weisen sie ein paar Gelenknocken auf, deren freie Enden voneinander wegweisen und die in den Lagerabschnitt eingreifen. Es wäre aber auch denkbar, die Gelenknokken am Führungselement anzuordnen, wobei diese in entsprechende Gelenkpfannen an der Schutzklappe eingreifen.

Die Schutzklappe kann wenigstens einen seitlichen Steuernocken aufweisen, welcher zum Schwenken in die Öffnungsposition mit einem Buchsenteil zusammenwirkt. Auch hier wäre eine kinematische Umkehr denkbar, indem ein Steuernocken am Buchsenteil vorgesehen ist, der in eine entsprechende Führungskulisse oder Steuerbahn an der Schutzklappe eingreift.

Um eine bestimmte Hebelwirkung zu erzielen, muss der Steuernocken im Abstand zur Schwenkachse der Schutzklappe bzw. zu den Gelenknocken angeordnet sein. In einem derartigen Fall ist es vorteilhaft, wenn der Steuernocken in die Ebene der Führungsbahn schwenkbar ist und zusammen mit dem Gelenknocken in der Führungsbahn bewegt werden kann. Bei einem U-förmigen Bügel mit Abwinklungen hat die Abwinklung wenigstens eine Aussparung zum Einführen des Steuernockens in die Führungsbahn.

Damit die Schutzklappe im ungesteckten Zustand stets geschlossen bleibt, ist sie vorteilhaft mit einer Schraubendruckfeder in die Schliessposition vorgespannt. Diese ist am Steckergehäuse abgestützt. Zum Schutz der Schraubendruckfeder und für ein besseres Zusammenwirken mit der Schutzklappe kann ein Stössel vorgesehen sein, der die Schraubendruckfeder wenigstens teilweise umgibt, und der am Steckergehäuse verschiebbar gelagert ist. Der Stössel liegt dabei an einem Hebelarm an, der die Stösselstirnseite in jeder Position der Schutzklappe berührt.

Vorzugsweise ist auch der Steckerstift gegen die Kraft einer Feder axial verschiebbar im Stekkergehäuse gehalten, wobei die Feder direkt oder indirekt an einem kabelseitigen Gehäuseteil und der Steckerstift direkt oder indirekt an einem steckerstirnseiten Gehäuseteil abgestützt ist.

Weitere Varianten des erfindungsgemässen Steckerteils bezüglich Lagerung und Steuerung der Schutzklappe, Konstruktion des Steckergehäuses oder Ausbildung des Führungselements sind ohne weiteres denkbar. Je nach Einsatzzweck erfüllt das Führungselement auch noch eine mechanische Schutzfunktion, insbesondere gegen Biegung und Torsion, was durch entsprechende Materialwahl berücksichtigt werden kann. Es wäre schliesslich auch noch denkbar, das Führungselement für eine mechanische Codierung von Steckerteilen zu benützen. Dabei müssten unterschiedliche Gattungen von Führungselementen so ausgebildet sein, dass jeweils nur Stekkerteile mit der gleichen Gattung von Führungselementen in ein bestimmtes Buchsenteil eingesteckt werden können.

Ausführungsbeispiele der Erfindung sind in den Zeichnungen dargestellt und werden nachstehend genauer beschrieben. Es zeigen:
- Figur 1: eine Seitenansicht eines Steckerteils mit den Merkmalen der Erfindung,
- Figur 2: eine Draufsicht auf das Steckerteil gemäss Figur 1,
- Figur 3: eine Ansicht der Stirnseite des Steckerteils gemäss Figur 1,
- Figur 4: ein Längsschnitt durch das Steckerteil gemäss Figur 1 in etwas vergrösserter Darstellung,
- Figur 5: einen Querschnitt durch die Ebene I-I am Steckerteil gemäss Figur 4,
- Figur 6: eine Detailvergrösserung aus dem Querschnitt gemäss Figur 5,
- Figur 7: eine perspektivische Darstellung des Steckerteils gemäss Figur 1,
- Figur 8: das Steckerteil gemäss Figur 7 mit geöffneter Schutzklappe,
- Figur 9: eine Explosionszeichnung des Steckerteils gemäss Figur 1,
- Figur 10: ein Steckerteil beim Einschieben in ein Buchsenteil,
- Figur 11: das Steckerteil gemäss Figur 10 beim Erreichen der endgültigen Einsteckposition
- Figur 12: eine perspektivische Darstellung eines alternativen Ausführungsbeispiels,
- Figur 13: das Steckerteil gemäss Figur 12 mit geöffneter Schutzklappe,
- Figur 14: eine perspektivische Darstellung eines weiteren alternativen Ausführungsbeispiels,
- Figur 15: eine Explosionszeichnung der Steckeraussenteile des Steckerteils gemäss Figur 14,
- Figur 16: eine Explosionszeichnung der Steckerinnenteile des Steckerteils gemäss Figur 14,
- Figur 17: einen Längsschnitt durch das Steckerteil gemäss Figur 14 in vergrösserter Darstellung,
- Figur 18: einen Schnitt durch die Ebene II-II am Steckerteil gemäss Figur 17, und
- Figuren 19 bis 22: verschiedene Relativlagen der Schutzklappe beim Einstecken des Steckerteils gemäss Figur 14 in ein Buchsenteil, jeweils in Seitenansicht und im Seitenquerschnitt.

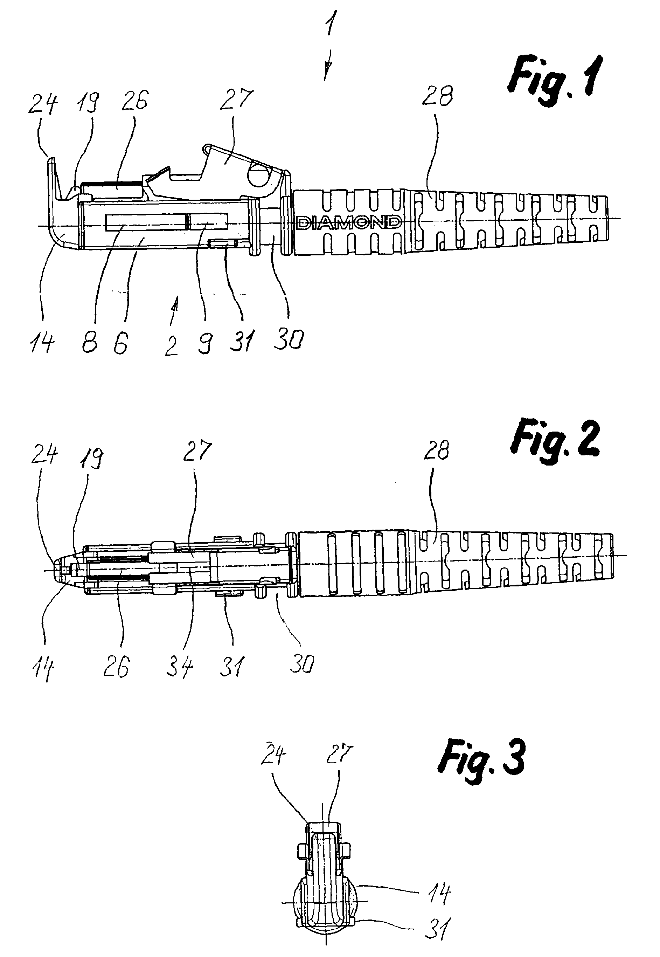

Wie in den Figuren 1 bis 4 dargestellt, besteht ein Steckerteil 1 im wesentlichen aus einem Stekkergehäuse 2, das in ein steckerstirnseitiges Gehäuseteil 4 und ein kabelseitiges Gehäuseteil 5 aufgeteilt ist. Das Steckergehäuse enthält dabei einen Steckerstift 3, der in Richtung der Längsmittelachse 34 federnd gelagert ist. Selbstverständlich wäre es auch denkbar, dass im gleichen Steckergehäuse mehrere Steckerstifte gehalten sind.

Der Steckerstift 3 ist in einer Stifthalterung 29 fixiert, welche auf der gegenüberliegenden Seite das optische Kabel aufnimmt. Dieses ist aus Gründen der besseren Übersichtlichkeit jedoch hier nicht dargestellt. Ein flexibler Kabelknickschutz 28 begrenzt auf bekannte Weise den zulässigen Biegeradius am Kabel. Auf der Stifthalterung 29 ist eine Schraubendruckfeder 11 gelagert, welche einerseits am kabelseitigen Gehäuseteil 5 und anderseits am mehreckig ausgebildeten Kopfende 35 der Stifthalterung abgestützt ist. Dieses Kopfende wird im ungesteckten Zustand gegen eine korrespondierende Öffnung im steckerstirnseitigen Gehäuseteil gepresst und dabei winkelmässig positioniert. Im eingesteckten Zustand wird das Kopfende dagegen vom steckerstirnseitigen Gehäuseteil 4 entkoppelt und gegen die Kraft der Feder 11 zurückgepresst.

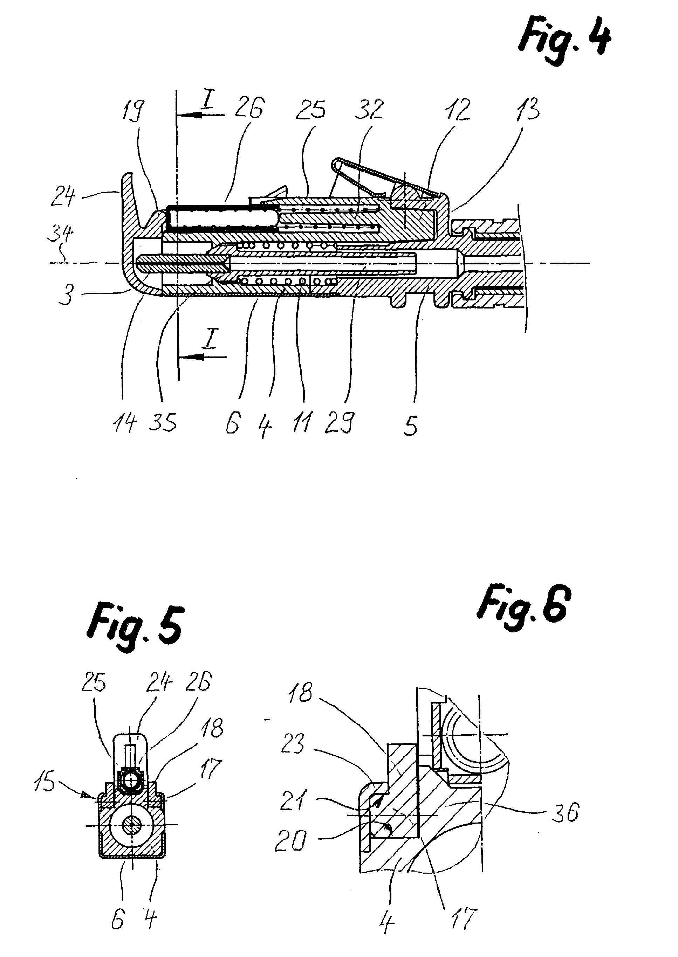

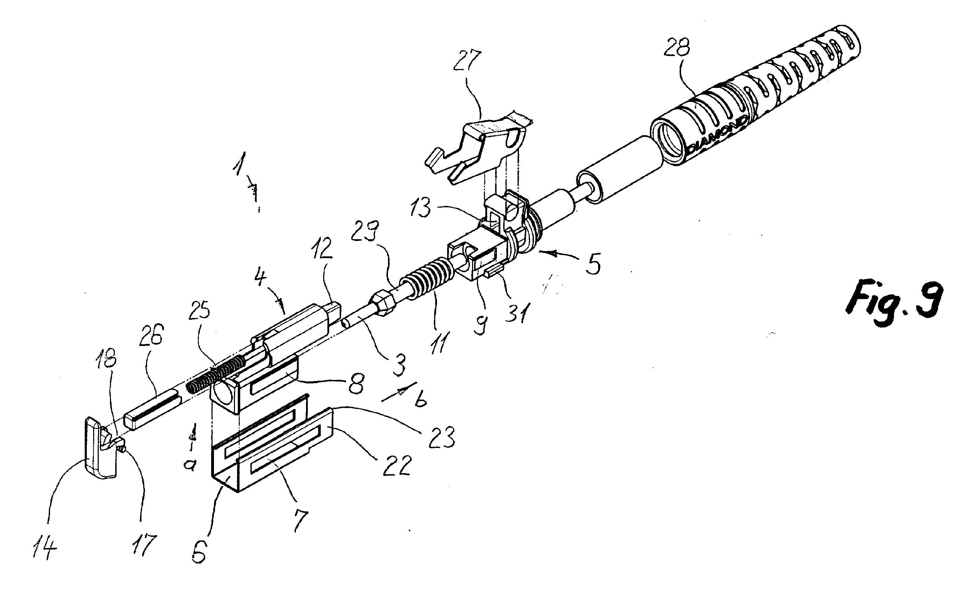

Die beiden Gehäuseteile 4 und 5 werden mit Hilfe eines Führungselements 6 zusammengehalten, das gemäss den Figuren 5 und 9 etwa U-förmig ausgebildet ist. In beiden U-Schenkeln 22 ist dabei je eine rechteckige Aussparung 7 angeordnet. Diese übergreift je eine korrespondierende Erhebung 8 auf den beiden Seitenwänden des steckerstirnseitigen Gehäuseteils 4 bzw. je eine korrespondierende Erhebung 9 auf den beiden Seitenwänden des kabelseitigen Gehäuseteils 5. Auf -das Gehäuseteil 4 kann der Bügel 6 in Pfeilrichtung a von unten her aufgeschnappt werden. Dagegen erfolgt die Aufschnappbewegung auf das kabelseitige Gehäuseteil 5 in Pfeilrichtung b parallel zur Längsmittelachse 34.

Die beiden Gehäuseteile 4 und 5 sind derart ausgebildet, dass die aneinander liegenden Berührungsflächen gleichzeitig eine Verdrehsicherung bewirken. So ist das Gehäuseteil 4 mit einer sich keilartig verjüngenden Sicherungsnase 12 versehen, welche in eine korrespondierende Ausnehmung 13 am Gehäuseteil 5 eingreift und sich dort leicht verkeilt. Diese leichte Verkeilung bewirkt eine völlig spielfreie Verbindung zwischen den Gehäuseteilen.

Am Gehäuseteil 5 sind zudem seitliche Stabilisierungsnocken 31 angeordnet, an denen sich der Bügel 6 zusätzlich abstützt.

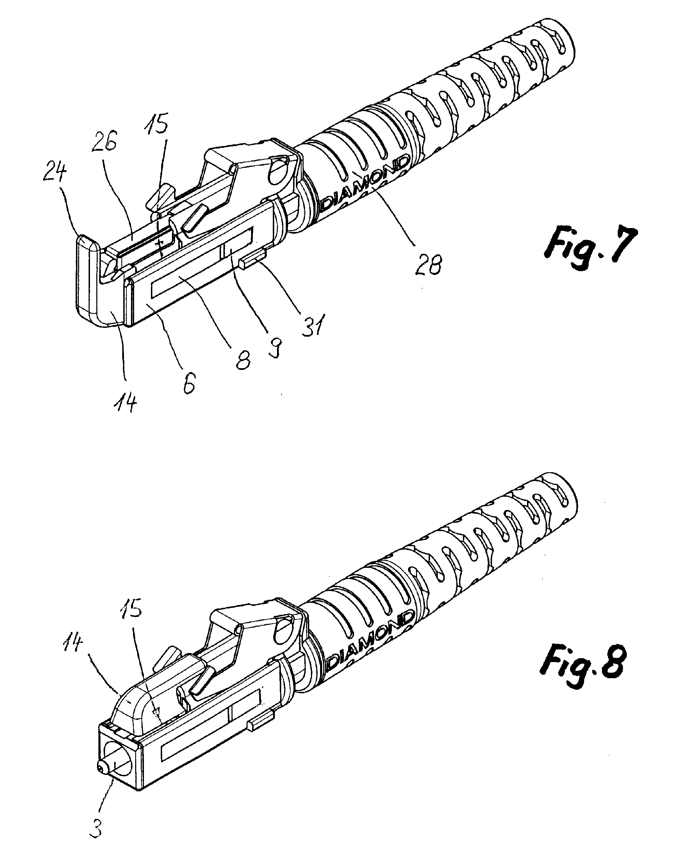

Die Steckerstirnseite ist im ungesteckten Zustand stets mit einer Schutzklappe 14 verschlossen. Diese verfügt über eine Gelenkgabel 18 mit seitlich daran angeordneten, voneinander wegweisenden Gelenknocken 17. Diese Gelenknocken sind in einer Führungsbahn 15 schwenkbar und verschiebbar gelagert. Die Schutzklappe 14 kann dabei in dem etwa um 90° aufgeschwenkten Zustand auf der Oberseite des Steckergehäuses zurückgeschoben werden, so dass sie im Buchsenteil weniger Platz beansprucht und den Steckvorgang nicht behindert. Die vollständige Öffnungsposition ist in Figur 8 dargestellt, die jedoch unter normalen Umständen nur im korrespondierenden Buchsenteil erreicht wird.

Die Führungsbahn 15 wird einerseits durch je einen Oberflächenabschnitt 20 am Gehäuseteil 4 und durch die Unterseite 21 einer Abwinklung 23 des Bügels 6 gebildet (Fig. 6). Jeder U-Schenkel 22 ist dabei soweit abgewinkelt, dass er die Gelenknocken 17 ausreichend übergreift. Durch eine Längsrippe 36 auf dem Gehäuseteil 4 ist die Gelenkgabel 18 zusätzlich stabilisiert.

Die Schutzklappe 14 wird mittels einer Schraubendruckfeder 25 in die Schliessposition vorgespannt. Diese Feder sitzt auf einem Federdorn 32 am Gehäuseteil 4. Die Beaufschlagung der Schutzklappe erfolgt indirekt über einen Stössel 26, der die Schraubendruckfeder teilweise umgibt. Dieser Stössel ist ebenfalls als Biegeteil aus Metall ausgebildet, wobei vier parallel abgewinkelte Seitenwände ein quaderförmiges Federgehäuse bilden. Die Stösselstirnseite berührt in jeder Position der Schutzklappe einen Hebelarm 19, der über die Ebene der Gelenknocken 17 hinausragt.

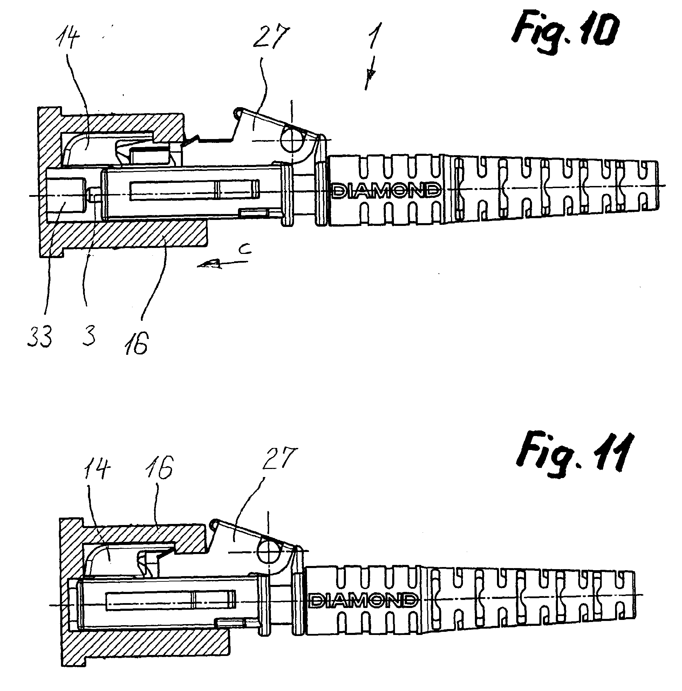

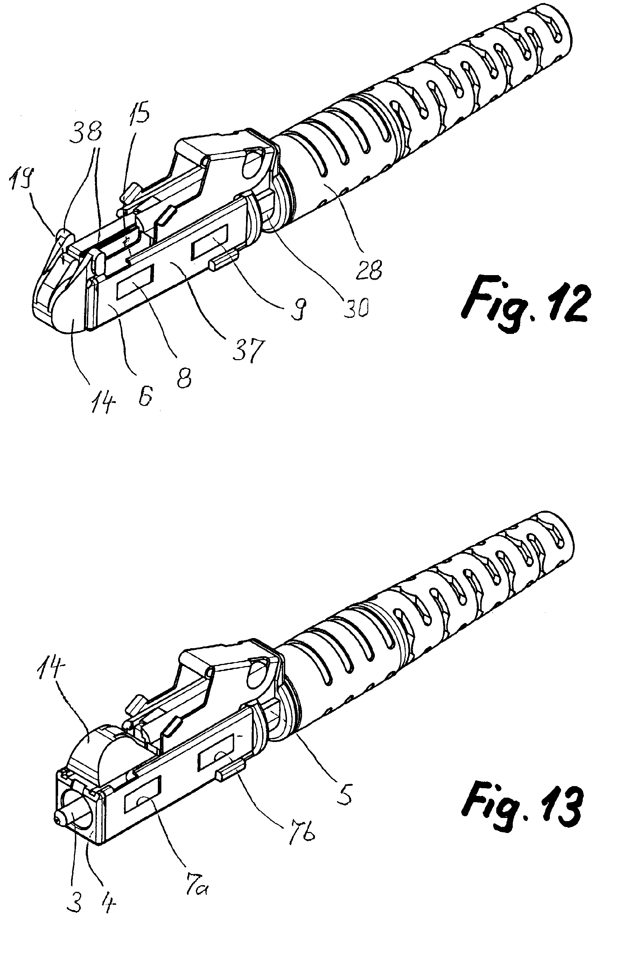

Die Steuerung der Schutzklappe 14 beim Einstecken in ein Buchsenteil 16 (Figuren 10 und 11) erfolgt an einer Steuerzunge 24, welche am äusseren Rand der Buchsenöffnung zurückgeklappt wird. Das Buchsenteil 16 enthält die eigentliche Buchse 33, welche den Steckerstift 3 passgenau aufnimmt. In der einmal aufgeschwenkten Position bleibt die Schutzklappe 14 relativ zum Buchsenteil 16 stehen, während das Steckerteil in Pfeilrichtung c weiter eingeschoben wird. Die Verriegelung des Steckerteils 1 im Buchsenteil 16 erfolgt mit Hilfe eines Verriegelungselements 27 auf hier nicht näher beschriebene Art und Weise.

Das in den Figur 12 und 13 dargestelle alternative Ausführungsbeispiel entspricht bezüglich Aufbau und Funkion im wesentlichen dem oben beschriebenen Steckerteil. Die Materialerhebungen 8 und 9 stossen jedoch nicht aneinander an, sondern sind im Abstand angeordnet. Dem entsprechend sind auch zwei separate Aussparungen 7a, 7b im Bügel 6 vorgesehen. Der dazwischen verbleibende Mittelsteg 37 verdeckt die Stossverbindung zwischen dem steckerstirnseitigen Gehäuseteil 4 und dem kabelseitigen Gehäuseteil 5.

Etwas modifiziert ist auch die Schutzklappe 14. An die Stelle einer zentralen Steuerzunge treten zwei seitlich vom Hebelarm 19 angeordnete Steuernocken 38. Diese wirken auf ähnliche Weise mit der Eintrittsöffnung am Buchsenteil zusammen, um von der Schliessposition in die Öffnungsposition bewegt zu werden.

Mittels einer hier nicht dargestellten Verbindungsklammer, könnten an einem Halsabschnitt 30 zwei Einzelstecker zu einem Duplexstecker kombiniert werden.

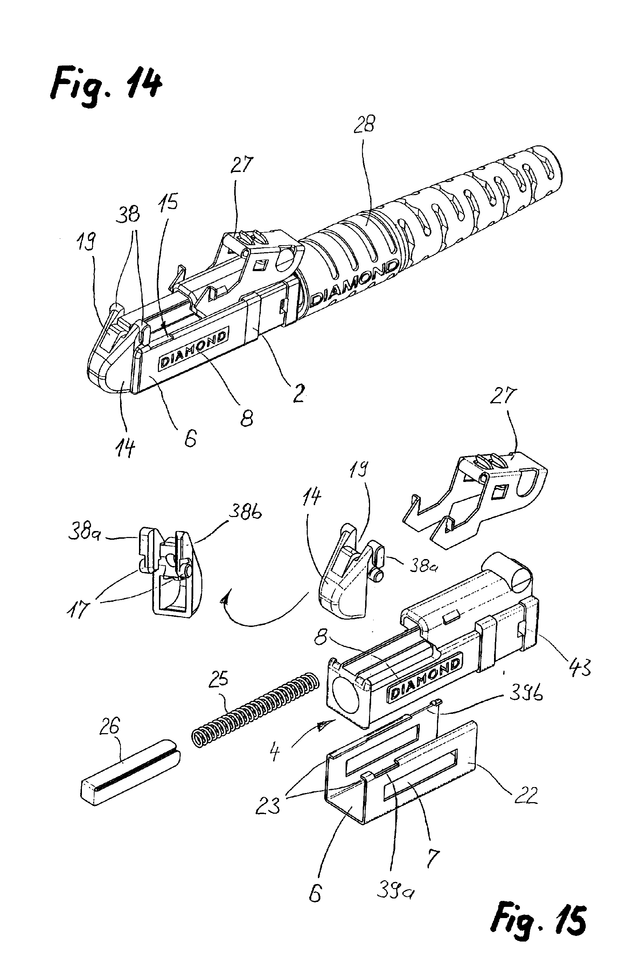

Beim alternativen Ausführungsbeispiel gemäss den Figuren 14 bis 22 werden, soweit möglich, gleiche Bezugszeichen für gleiche oder gleichartige Teile verwendet, wie bei den vorhergehenden Ausführungsbeispielen. Der Hauptunterschied gegenüber den beiden vorhergehenden Ausführungsbeispielen besteht hier darin, dass das Steckergehäuse 2 eine etwas andere Konfiguration aufweist, und dass dabei das Führungselement nicht zusätzlich auch noch die Funktion übernimmt, um zwei Gehäuseteile zusammenzuhalten.

Gemäss Figur 14 unterscheidet sich das Steckerteil von der äusseren Erscheinung her kaum von dem in Figur 12 dargestellten Steckerteil. Der als Führungselement dienende U-förmige Bügel 6 dient jedoch ausschliesslich dazu, einen Bestandteil der Führungsbahn 15 für die Schutzklappe 14 zu bilden.

Aus Figur 15 ist ersichtlich, dass das Steckergehäuse 2 fast ausschliesslich aus einem stirnseitigen Gehäuseteil 4 besteht, das auf den beiden Längsseiten mit je einer einzigen Materialerhebung 8 versehen ist. Am kabelseitigen Ende dieses Gehäuseteils sind seitliche Schlitze 43 angeordnet, welche der Verankerung des kabelseitigen Gehäuseteils dienen. Die Schutzklappe 14 ist mit Blick auf die Aussenseite und auf die Innenseite dargestellt. Die Steuernocken 38 sind nicht völlig symmetrisch ausgebildet. Der Steuernocken 38a ist etwas breiter als der Steuernocken 38b. Der Grund dafür liegt darin, dass der Steuernocken 38a ebenfalls unter die entsprechende Abwinklung 23 eintaucht, wie die beiden Gelenknocken 17.

Der U-förmige Bügel 6 ist in den beiden Schenkeln 22 mit einer Aussparung 7 versehen, in welche die Materialerhebung 8 am Steckergehäuse formschlüssig hineinpasst. In den Abwinklungen 23 ist auf jeder Seite und zwar versetzt zueinander eine Aussparung 39a, 39b vorgesehen. Diese Aussparung erlaubt das Eintauchen des Steuernockens 38a in die Führungsbahn 15. Die versetzte Anordnung hat den Vorteil, dass es keine Rolle spielt, in welcher Seitenlage der Bügel aufgeschnappt wird. Anderseits kann die Schutzklappe 14 im Bereich einer Aussparung aber auch nicht aus der Führungsbahn herausfallen, weil zumindest einer der Gelenknocken 17 immer unter einer Abwinklung 23 geführt ist.

Die Vorspannung der Schutzklappe 14 in die Schliessposition ist ähnlich gelöst wie bei den vorhergehenden Ausführungsbeispielen, nämlich über eine Schraubendruckfeder 25 und über einen Stössel 26. Auch das aufschnappbare Verriegelungselement 27 ist ähnlich ausgebildet und erfüllt eine identische Funktion.

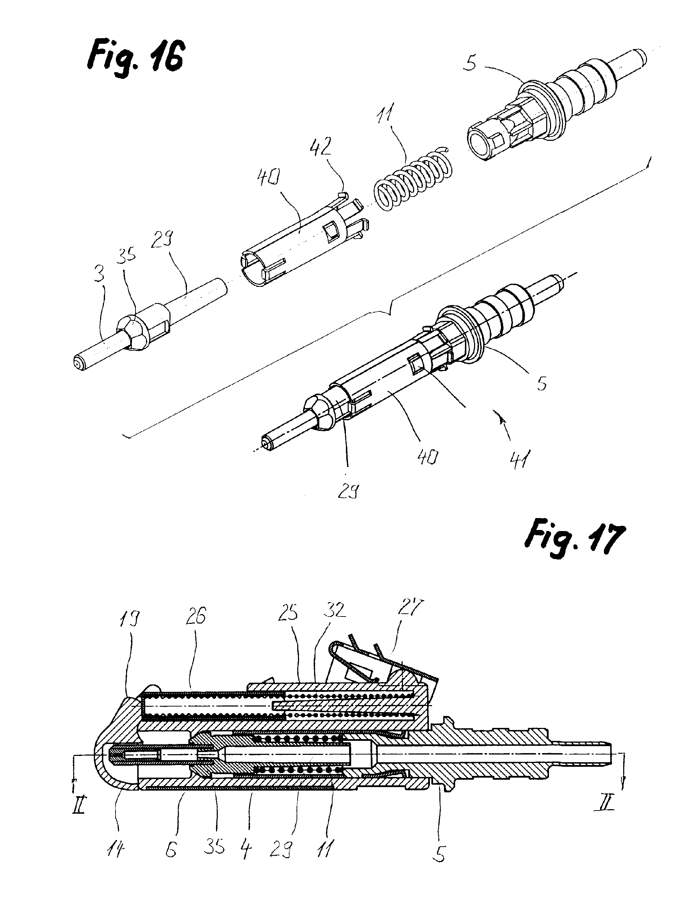

Gemäss Figur 17 sind alle inneren Steckerteile zu einer Kabelabschlusseinheit 41 zusammengefasst, die sich leicht konfektionieren lässt. Zu diesem Zweck ist die Stifthalterung 29 mit dem Steckerstift 3 drehfest und axial verschiebbar in einer Hülse 40 gelagert, und zwar derart, dass das Kopfende 35 mit dem Pyramidenstumpf aus der Hülse ragt. Die Hülse 40 lässt sich unter Einschluss der Schraubendruckfeder 11 auf das kabelseitige Gehäuseteil 5 schnappen. Letzteres hat praktisch nur noch die Aufgabe, das steckerstirnseitige Gehäuseteil 5, das praktisch das gesamte Steckergehäuse ausmacht, auf der Kabelseite zu verschliessen. An der Hülse 40 sind auf einer Seite über den Umfang verteilt mehrere Rastzungen 42 angeordnet, von denen jeweils zwei diametral gegenüberliegende in die seitlichen Schlitze 43 am Gehäuseteil 4 einrasten.

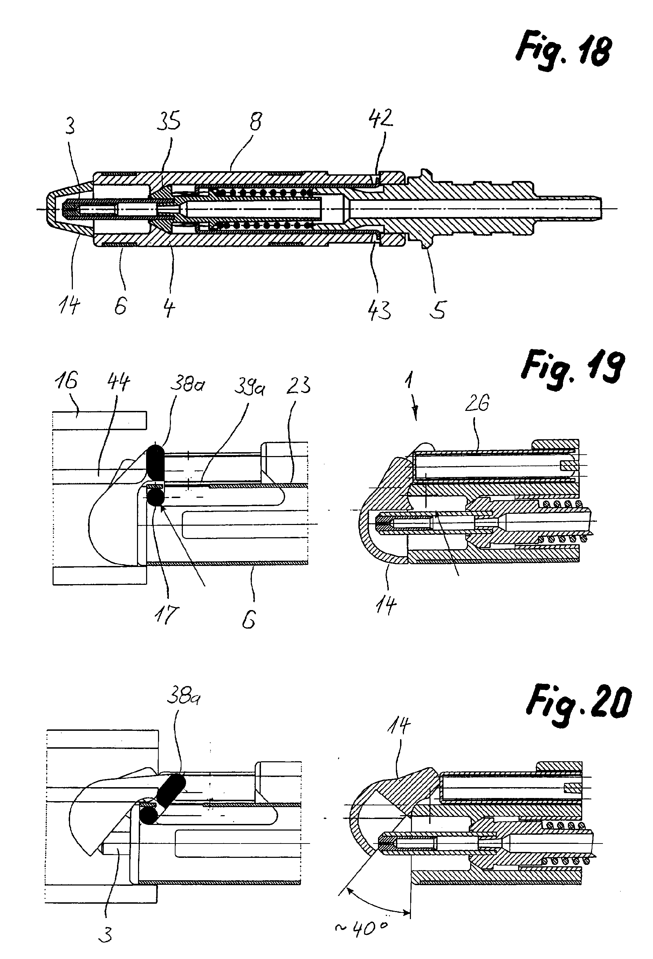

Figur 17 zeigt das Steckerteil im fertig montierten Zustand mit geschlossener Schutzklappe 14. Die Verrastung der beiden Gehäuseteile 4 und 5 mittels der Rastzungen 42 bzw. der Schlitze 43 ist in Figur 18 dargestellt. Aus dieser Figur ist auch deutlich sichtbar, dass die Tiefe der Materialerhebungen 8 der Materialbreite des U-förmigen Bügels 6 entspricht.

Figur 19 zeigt die Situation eines Steckerteils 1 unmittelbar vor dem Einstecken in ein korrespondierendes Buchsenteil 16. Dieses ist an der Eintrittsöffnung mit seitlichen Steuerrippen 44 versehen, welche mit den Steuernocken 38 zusammenwirken. Da die Steuernocken im Abstand zu den Gelenknocken 17 angeordnet sind, entsteht beim Einstecken des Steckerteils eine Hebelwirkung, welche zunächst eine reine Schwenkbewegung der Schutzklappe 14 bewirkt.

Figur 20 zeigt einen Öffnungswinkel der Schutzklappe von ca. 40° mit bereits geringfügig in das Buchsenteil eingeschobenem Steckerteil und mit immer noch abgedeckter Stirnseite des Steckerstifts. Gemäss Figur 21 ist die Schwenkbewegung von insgesamt ca. 90° fast vollständig -ausgeführt und der Steckerstift dringt bereits in die Buchse 33 ein. Der Steuernocken 38a taucht dabei durch die Ausnehmung 39a in die Ebene der Führungsbahn 15 und unter die entsprechende Abwinklung 23. Die Gelenknocken 17 haben sich relativ zum Steckergehäuse noch nicht verschoben.

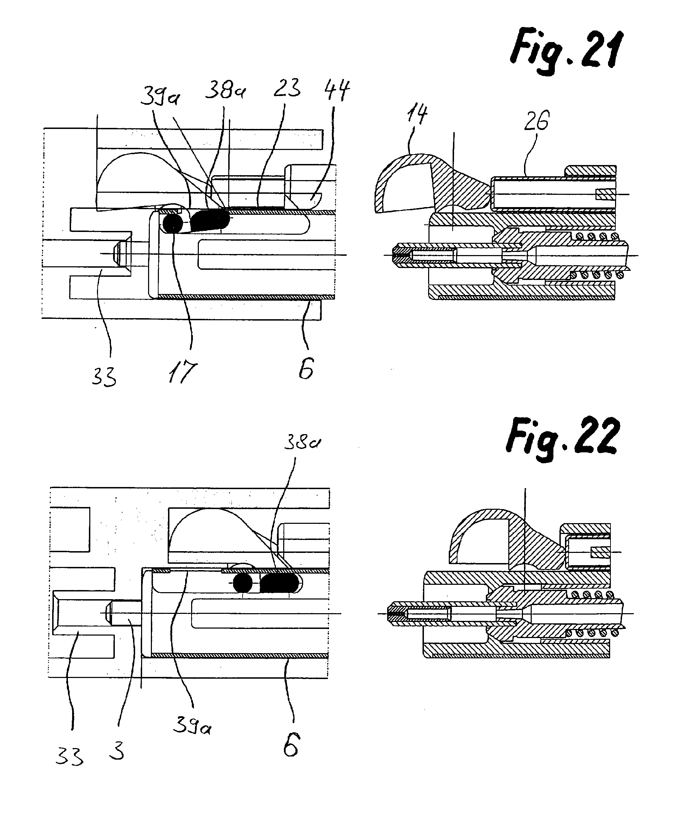

Erst beim weiteren Einsteckvorgang bis zum Erreichen der endgültigen Endposition wird die Schutzklappe 14 relativ zur Gehäusestirnseite zurückgeschoben, wie aus Figur 22 ersichtlich ist. Da auch der Steuernocken 38a unter der Abwinklung 23 gehalten ist, kann die Schutzklappe 14 unter der Einwirkung der Schliessfeder in dieser Position keine Schliessbewegung ausführen.

Selbstverständlich braucht das Steckerteil nicht die in den Ausführungsbeispielen dargestellte Konfiguration zu haben. Anstelle einer quaderförmigen Aussenkontur wäre auch eine zylindrische Aussenkontur denkbar. Auch die Konfiguration und Funktion der Schutzklappe 14 könnte modifiziert werden, ohne dass dabei der Gegenstand der Erfindung verlassen wird.

## Patentansprüche

1. Steckerteil (1) für eine optische Steckverbindung mit einem Steckergehäuse (2) und mit wenigstens einem Steckerstift (3), sowie mit einer Schutzklappe (14), welche an einem Lagerabschnitt (15) derart am Steckergehäuse gelenkig gelagert ist, dass sie beim Einstecken des Steckerteils in ein Buchsenteil (16) aus einer Schliessposition mit verdeckter Stirnseite des Steckerstifts in eine Öffnungsposition mit freiliegender Stirnseite des Stekkerstifts bewegbar ist, dadurch gekennzeichnet, dass ein am Steckergehäuse (2) befestigtes Führungselement (6) den Lagerabschnitt für die Schutzklappe bildet oder Bestandteil dieses Lagerabschnitts ist.

2. Steckerteil nach Anspruch 1, dadurch gekennzeichnet, dass die Schutzklappe (14) an einer Führungsbahn (15) derart schwenkbar und verschiebbar gelagert ist, dass sie aus der Schliessposition an der Stirnseite des Steckergehäuses in eine relativ zur Stirnseite zurückversetzte Öffnungsposition bewegbar ist, wobei das Führungselement (6) die Führungsbahn bildet oder Bestandteil der Führungsbahn ist.

3. Steckerteil nach Anspruch 1 oder 2, dadurch gekennzeichnet, dass das Führungselement (6) ein vorzugsweise etwa U-förmiger Bügel ist, der auf das Steckergehäuse (2) aufgeschnappt ist und dieses wenigstens teilweise umgibt.

4. Steckerteil nach Anspurch 3, dadurch gekennzeichnet, dass der Bügel etwa U-förmig ausgebildet ist, und dass in den beiden seitlichen U-Schenkeln (22) wenigstens je eine Aussparung (7) angeordnet ist, welche mit wenigstens je einer Materialerhebung (8), auf der Aussenseite des Steckergehäuses zusammenwirkt.

5. Steckerteil nach Anspruch 4, dadurch gekennzeichnet, dass das Steckergehäuse aus wenigstens zwei separaten Gehäuseteilen (4, 5) besteht, und dass die beiden Gehäuseteile durch den Bügel zusammengehalten werden.

6. Steckerteil nach Anspruch 2 und einem der Ansprüche 3 bis 5, dadurch gekennzeichnet, dass die Führungsbahn (15) durch einen Oberflächenabschnitt (20) des Steckergehäuses (2) und durch einen Oberflächenabschnitt (21) des Führungselements (6) gebildet wird.

7. Steckerteil nach Anspruch 6, dadurch gekennzeichnet, dass das Führungselement (6) als etwa U-förmiger Bügel ausgebildet ist, dessen U-Schenkel (22) an den freien Enden abgewinkelt sind.

8. Steckerteil nach einem der Ansprüche 1 bis 7, dadurch gekennzeichnet, dass die Schutzklappe (14) ein Paar Gelenknocken (17) aufweist, deren freie Enden voneinander wegweisen und die in den Lagerabschnitt eingreifen.

9. Steckerteil nach Anspruch 8, dadurch gekennzeichnet, dass die Schutzklappe (14) wenigstens einen seitlichen Steuernocken (38) aufweist, welcher zum Schwenken in die Öffnungsposition mit einem Buchsenteil (16) zusammenwirken.

10. Steckerteil nach Anspruch 7 und Anspruch 9, dadurch gekennzeichnet, dass der Steuernocken (38) im Abstand zu den Gelenknocken (17) angeordnet ist und dass er in die Ebene der Führungsbahn schwenkbar ist, wobei die Abwinklungen (23) an den U-Schenkeln (22) wenigstens eine Aussparung (39) zum Einführen des Steuernockens (38) aufweist.

11. Steckerteil nach einem der Ansprüche 1 bis 10, dadurch gekennzeichnet, dass die Schutzklappe (14) mittels einer Schraubendruckfeder (25) in die Schliessposition vorgespannt ist, welche am Steckergehäuse abgestützt ist.

12. Steckerteil nach Anspruch 11, dadurch gekennzeichnet, dass die Schraubendruckfeder (25) die Schutzklappe (14) über einen Stössel (26) beaufschlagt, der die Schraubendruckfeder wenigstens teilweise umgibt und der am steckerstirnseitigen Gehäuseteil (4) verschiebbar gelagert ist.

13. Steckerteil nach einem der Ansprüche 1 bis 12, dadurch gekennzeichnet, dass der Stekkerstift (3) gegen die Kraft einer Feder (11) axial verschiebbar im Steckergehäuse (2) gehalten ist, wobei die Feder direkt oder indirekt an einem kabelseitigen Gehäuseteil (5) und der Steckerstift (3) direkt oder indirekt an einem steckerstirnseitigen Gehäuseteil (4) abgestützt ist.

14. Steckerteil nach einem der Ansprüche 1 bis 13, dadurch gekennzeichnet, dass das Führungselement (6) aus Stahl, insbesondere als Biegeteil aus Stahlblech gefertigt ist.
